# EUROPEAN PATENT SPECIFICATION

(11) **EP 3 611 723 B1**
(45) Date of publication and mention of the grant of the patent: **04.05.2022**
(21) Application number: 19191722.8
(22) Date of filing: 14.08.2019
(51) Int. Cl.: G10L 15/18, G10L 15/22, G06F 3/16, G10L 15/26, G10L 15/30, G06F 3/048

(54) **GRAPHICAL USER INTERFACE VOICE CONTROL APPARATUS/SYSTEM AND METHOD**
SPRACHSTEUERUNGSVORRICHTUNG/-SYSTEM UND - VERFAHREN FÜR GRAFISCHE BENUTZEROBERFLÄCHE
APPAREIL/SYSTÈME ET PROCÉDÉ DE COMMANDE VOCALE D'INTERFACE UTILISATEUR GRAPHIQUE

(30) Priority: 14.08.2018 KR 20180095150
(43) Date of publication of application: 19.02.2020
(73) Proprietor: ALTIMEDIA CORPORATION, Seoul 06655 (KR)
(72) Inventor: JEON, Yun Ho, 06547 Seoul (KR); KIM, Jun Hyung, 13623 Seongnam-si, Gyeonggi-do (KR)
(74) Representative: M. Zardi & Co S.A.

(56) References cited:
- WO-A1-2006/037219
- WO-A2-94/16435
- US-A1- 2013 110 510
- US-A1- 2017 069 308
- US-A1- 2018 039 477

## Description

### CROSS-REFERENCE TO RELATED APPLICATION

This application claims the priority benefit of Korean Patent Application No. 10-2018-0095150, filed on August 14, 2018 in the Korean Intellectual Property Office.

### BACKGROUND OF THE DISCLOSURE

### Field of the Disclosure

The present disclosure relates to voice control, and more particularly, to a Graphical User Interface (GUI) voice control capable of increasing the accuracy and speed of voice recognition by matching voice signals with command patterns in real time.

### Description of the Related Art

As smart speakers such as Amazon's Echo have become widespread with advances in voice recognition and remote microphone technologies, applications for voice control of devices and services with Graphical User Interfaces (GUIs) are increasing.

A general recognition technique for voice control is to determine start and end points of a sentence by checking energy levels of audio signals received from a microphone and by checking whether there is a non-voice interval, and to derive recognition results based on signals determined to be a voice interval.

In the case of such an end point detection manner, only the case in which a sufficiently long pause interval is continued is recognized as an end of a sentence so as not to misconceive a pause interval, in which voice is not detected, as an end of a sentence when continuous conversational voice that a user speaks is a recognition target.

Accordingly, it takes a response time, compared to the case of controlling a GUI through conventional input devices such as a remote controller. In addition, when a pause time for end point detection is shortened so as to increase a response speed, a momentary pause during speech of a sentence in an interactive query may be misconceived as an end point, resulting in poor accuracy.

US 2018/039477 A1 discloses computerized methods, systems, and devices, including computer programs encoded on a computer storage medium, for integrating voice-based interaction and control into a native graphical user interface (GUI) of an executed application. WO 94/16435 A2 discloses maintaining dynamic categories for speech rules in a speech recognition system which has a plurality of speech rules each comprising a language model and action.

### [Related Art Document]

### [Patent Document]

Korean Patent Application Publication No. 10-2010-0003672 entitled "VOICE RECOGNITION APPARATUS AND METHOD USING IMAGE INFORMATION" (January 11, 2010)

### SUMMARY OF THE DISCLOSURE

Therefore, the present disclosure has been made in view of the above problems, and it is one object of the present disclosure to provide a GUI voice control apparatus/system capable of improving the speed and accuracy of voice recognition by matching a voice signal transmitted in real time with a command pattern without an end point detection process and a method thereof.

The invention is defined by the appended independent claims. Further preferred embodiments are provided in the dependent claims.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 illustrates hardware and network configurations of an electronic apparatus;
FIG. 2 illustrates apparatuses communicating with a GUI voice control apparatus;
FIG. 3 illustrates a block diagram of a GUI voice control apparatus according to an embodiment of the invention;
FIGS. 4A and 4B illustrate the performance of a GUI voice control apparatus;
FIG. 5 is a flowchart briefly explaining a GUI voice control system in accordance with the invention;
FIG. 6 illustrates a block diagram of a GUI voice control apparatus;
FIG. 7 illustrates a block diagram of a voice conversion server;
FIG. 8 illustrates a block diagram of a natural language recognition server;
FIG. 9 illustrates a flowchart of a GUI voice control method according to an embodiment of the invention;
FIG. 10 illustrates a flowchart of a GUI voice control method according to another embodiment of the invention;
FIG. 11 illustrates a flowchart of a voice conversion method; and
FIG. 12 illustrates a flowchart of a natural language recognition method;

### DETAILED DESCRIPTION OF THE DISCLOSURE

The present disclosure will now be described more fully with reference to the accompanying drawings and contents disclosed in the drawings. However, the present disclosure should not be construed as limited to the exemplary embodiments described herein.

The terms used in the present specification are used to explain a specific exemplary embodiment and not to limit the present inventive concept. Thus, the expression of singularity in the present specification includes the expression of plurality unless clearly specified otherwise in context. It will be further understood that the terms "comprise" and/or "comprising", when used in this specification, specify the presence of stated components, steps, operations, and/or elements, but do not preclude the presence or addition of one or more other components, steps, operations, and/or elements thereof.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless otherwise mentioned or clearly inferred from context, the expression "x uses a or b" means any one of natural inclusive permutations.

In addition, as used in the description of the disclosure and the appended claims, the singular forms "a", "an" and "the" are intended to include the plural forms as well, unless context clearly indicates otherwise.

In addition, the terms such as "first" and "second" are used herein merely to describe a variety of constituent elements, but the constituent elements are not limited by the terms. The terms are used only for the purpose of distinguishing one constituent element from another constituent element.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In addition, in the following description of the present disclosure, a detailed description of known functions and configurations incorporated herein will be omitted when it may make the subject matter of the present disclosure unclear. The terms used in the specification are defined in consideration of functions used in the present disclosure, and can be changed according to the intent or conventionally used methods of clients, operators, and users. Accordingly, definitions of the terms should be understood on the basis of the entire description of the present specification.

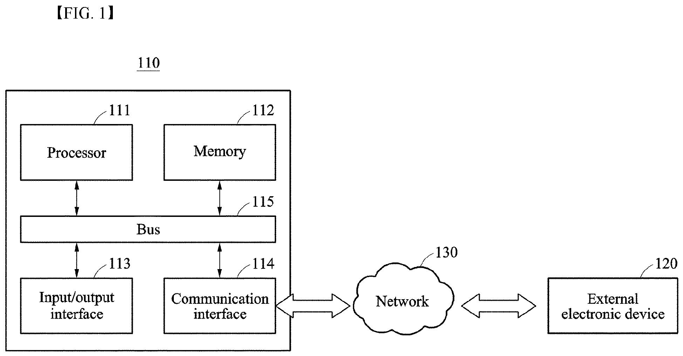

An electronic device described with reference to the accompanying FIG. 1 may be a GUI voice control apparatus, a text conversion server, a natural language recognition server, a command pattern and entity database, a screen output device, a GUI input device, an audio input device, or the like described with reference to FIGS. 1 to 12.

FIG. 1 illustrates hardware and network configurations of an electronic apparatus.

Referring to FIG. 1, an electronic device 110 may include a processor 111, a memory 112, an input/output interface 113, a communication interface 114, and a bus 115. According to various embodiments, at least one of the components of the electronic device 110 may be omitted, or the electronic device 110 may additionally include other components.

The processor 111 may include one or more of a Central Processing Unit (CPU), an Application Processor (AP), and a Communication Processor (CP). The processor 111 may execute arithmetic operations or data processing related to control or communication of at least one other component of the electronic device 110.

The bus 115 may include circuits configured to connect the components 111 to 114 to each other and transmit communication between the components 111 to 114.

The memory 112 may include a volatile and/or non-volatile memory. The memory 112 may store instructions or data related to at least one other component of the electronic device 110. The memory 112 may store software and/or a program. The program may include a kernel, a middleware, an Application Programming Interface (API), an application, etc. At least a portion of the kernel, the middleware, or the API may be referred to as an Operating System (OS).

For example, a kernel may serve to control or manage system resources (the processor 111, the memory 112, or the bus 115, etc.) used to execute operations or functions implemented in other programs (middleware, API, and application). In addition, a kernel may provide an interface capable of controlling or managing system resources by accessing individual components of the electronic device 110 through a middleware, API, or application.

For example, a middleware may act as an intermediary such that an API or an application communicates and exchanges data with a kernel.

In addition, the middleware may process one or more work requests, received from an application, according to a priority order. For example, at least one of applications may be prioritized by the middleware to use the system resource (the processor 111, the memory 112, the bus 115, etc.) of the electronic device 110. For example, the middleware may process one or more work requests according to a priority order assigned to at least one application to perform scheduling, load balancing, or the like for the work requests.

An API, which is an interface allowing an application to control functions provided from a kernel or a middleware, may include, for example , at least one interface or function (command) for file control, window control, image processing, character control, or the like.

The input/output interface 113 may act as, for example, an interface serving to transmit instructions or data input from a user or other external device to other components of the electronic device 110. In addition, the input/output interface 113 may output instructions or data received from other components of the electronic device 110 to a user or other external device. For example, the input/output interface 113 may receive input of voice signals from a microphone.

The communication interface 114 may establish communication between the electronic device 110 and an external device. For example, the communication interface 114 may be connected to the network 130 via wireless or wired communication to communicate with an external electronic device 120.

For example, the wireless communication may be at least one of Long-Term Evolution (LTE), LTE Advanced (LTE-A), Code Division Multiple Access (CDMA), Wideband CDMA (WCDMA), Universal Mobile Telecommunications System (UMTS), Wireless Broadband (WiBro), and Global System for Mobile Communications (GSMC), as a cellular communication protocol.

The wireless communication may include near-field communication. For example, the near-field communication may include at least one of Wireless Fidelity (Wi-Fi), Bluetooth, Near Field Communication (NFC), and the like. Alternatively, the wireless communication may include a Global Navigation Satellite System (GNSS). For example, the GNSS may include at least one of a Global Positioning System (GPS), a Global navigation satellite system (Glonass), a BeiDou navigation satellite system or Galileo, and a European global satellite-based navigation system, depending on an area or bandwidth used.

For example, the wired communication may include at least one of Universal Serial Bus (USB), High Definition Multimedia Interface (HDMI), Recommended Standard 232 (RS-232), Plain Old Telephone Service (POTS), and the like.

For example, the network 130 may include at least one of a telecommunication network, a computer network (e.g., LAN or WAN), Internet, and a telephone network.

The external electronic device 120 may be the same as or different from the electronic device 110. For example, the external electronic device 120 may be a smartphone, a tablet Personal Computer (PC), a set-top box, a smart TV, a smart speaker, a desktop PC, a laptop PC, a workstation, a server, a database, a camera, a wearable device, or the like.

The server may include a group of one or more servers. According to various embodiments, all or a portion of operations executed in the electronic device 110 may be executed in another external electronic device 120 or a plurality of external electronic devices 120.

The external electronic device 120 may execute a requested or additional function and may transmit a result of the execution to the electronic device 110. For example, the external electronic device 120 may perform voice recognition on audio signals and/or voice signals transmitted from the electronic device 110 and transmit a result of the voice recognition to the electronic device 110.

The electronic device 110 may receive a voice recognition result from the external electronic device 120 and may process the received voice recognition result as it is or additionally process the received voice recognition result to provide a requested function or service. For this, for example, a cloud computing technology, a distributed computing technology, or a client-server computing technology may be used.

According to an embodiment, a GUI voice control apparatus may communicate with the following devices to perform voice control.

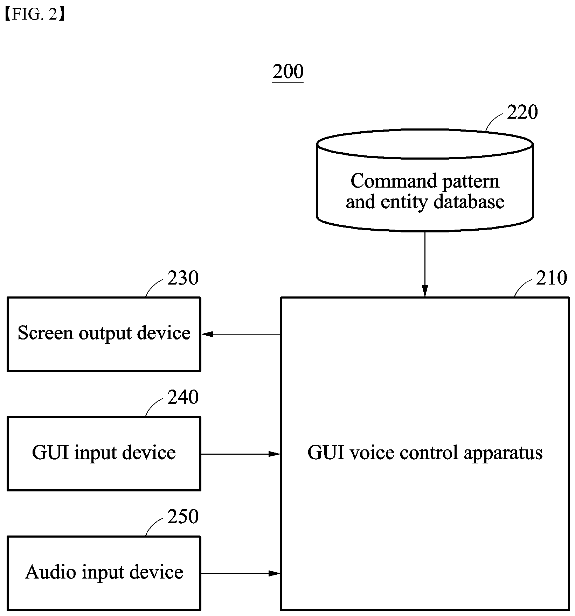

FIG. 2 illustrates apparatuses communicating with a GUI voice control apparatus according to an embodiment of the present disclosure.

Referring to FIG. 2, a GUI voice control apparatus 210 may be connected to a command pattern and entity database 220, a screen output device 230, a GUI input device 240, and an audio input device 250 via a network to communicate therewith. Communication manners thereof have been described with reference to FIG. 1, thus being omitted. According to various embodiments, in the GUI voice control apparatus 210, one or more of the command pattern and entity database 220, the screen output device 230, the GUI input device 240, and the audio input device 250 may be omitted or included.

The command pattern and entity database 220 may be connected to a web server to update at least one of command patterns and entities in the GUI voice control apparatus 210.

The command pattern and entity database 220 may convert at least one of entities and command patterns into a database for each category. The category may be determined by a state of service.

For example, at least one of command patterns and entities may be created or updated through a management website by a developer or an administrator, or may be generated by processing another source, e.g., information (e.g., list of movie titles) received from a content management system (CMS) of a target service.

A GUI voice control apparatus 200 may increase accuracy of voice recognition using context information in which at least one of defined command patterns and entities is dynamically reflected in a language model.

The screen output device 230 may be a device including a display, such as an LED TV or a monitor, which outputs GUI status information. Hereinafter, a display may be referred to as a screen.

The display may include, for example, a liquid crystal display (LCD), a light-emitting diode (LED) display, an organic light-emitting diode (OLED) display, a microelectromechanical system (MEMS) display, or electronic paper.

The screen output device 230 may output a Graphical User Interface (GUI) according to GUI status information of an application through a middleware. The middleware may include a GUI framework of an OS, a library, a web browser, or the like. The GUI voice control apparatus 210 may perform accurate voice recognition using GUI status information and control an application. According to various embodiments, the GUI voice control apparatus 210 may be included in a set-top box.

The GUI input device 240 may receive input of numerals or characters or include a mouse, a touch panel, a keyboard, a remote controller, or the like for setting various functions of the GUI voice control apparatus 210. For example, a user may generate a GUI event through the GUI input device 240. The generated GUI event may be transmitted to an application through a middleware to generate GUI status information. Here, a GUI event may mean a click event, a key event, or the like.

The audio input device 250 may be a device, such as a microphone, a smart speaker, or a smartphone, capable of receiving input of a user's voice. The audio input device 250 may convert the input user's voice into a voice signal to transmit the converted voice signal to the GUI voice control apparatus 210. The voice signal may include a call word or a command. The GUI voice control apparatus 210 may recognize intent of a received voice signal and an entity thereof to output a control signal. The control signal may be transmitted to an application or may be converted into a GUI event, such as a click event, through a middleware to control an application.

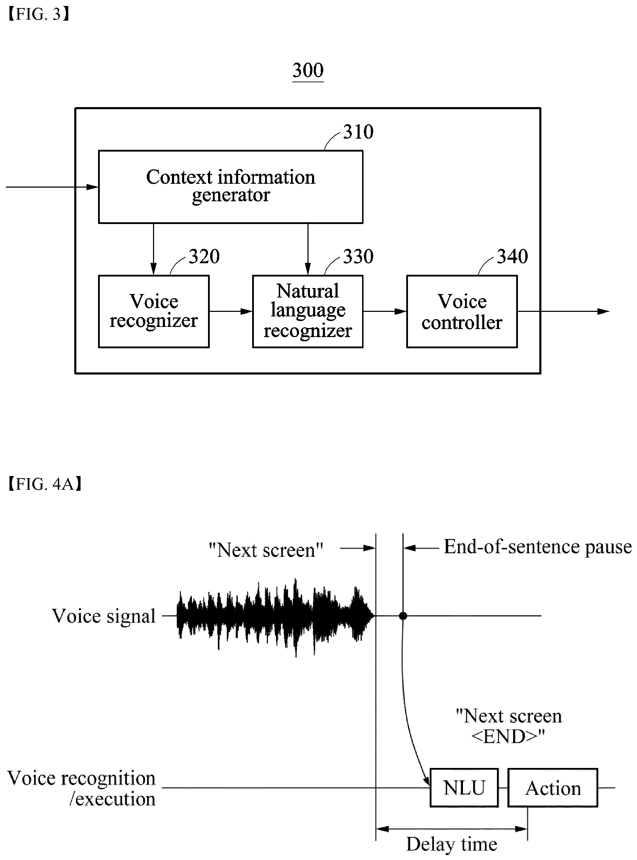

Hereinafter, the GUI voice control apparatus 210 is described in detail with reference to FIG. 3.

FIG. 3 illustrates a block diagram of a GUI voice control apparatus according to an embodiment of the invention.

Referring to FIG. 3, a GUI voice control apparatus 300 includes a context information generator 310, a voice recognizer 320, a natural language recognizer 330, and a voice controller 340.

The context information generator 310 dynamically reflects GUI status information and DB information in a language model to generate context information. The context information may be a dynamic language model reflecting GUI status information and DB information.

The GUI status information may include GUI information and a service status.

GUI information may include visual information, such as text and images, which is output on a current screen 120, and information on hierarchical relationships. The context information generator 310 may access an application to collect GUI information and dynamically reflect the same in a language model.

For example, the visual information may mean the text, location, or size of a menu, a button, or a link, the location or size of an icon or image data, auxiliary text information, or parent-child relationships between GUI elements. The auxiliary text information may mean an alt attribute in an HTML image tag (<image>), a description attribute of Android view, or the like.

The service status may be information on a logical location of a current screen in an entire service structure. For example, the service status may mean a specific service step or status, such as a search result screen or a payment screen, in a Video On Demand (VOD) service. In addition, the service status may be represented by a web address (Uniform Resource Locator, URL) of a current page in the case of a web application, and may be information that an application directly describes using an API of the GUI voice control apparatus 300.

DB information includes information on at least one of predefined command patterns and entities received from the command pattern and entity database 220.

The information on at least one of command patterns and entities may mean at least one of relevant command patterns and entities according to a service status of an application. For example, the context information generator 310 may receive information on at least one of command patterns and entities, categorized as a purchase service, from the command pattern and entity database 220 when the service status is a "purchase service" to dynamically reflect the same in a language model. According to various embodiments, the context information generator 310 may use at least one of command patterns and entities transmitted by an application using an API.

The context information generator 310 dynamically reflects GUI status information and DB information to generate context information.

Meanwhile, context information generated in real time may be reflected in a language model or only partially reflected in the language model, depending upon a situation.

More particularly, the context information generated by the context information generator 310 in real time may become a portion of a language model. In particular, for voice recognition processed by the voice recognizer 320, an acoustic model and a language model are necessary. Real-time context information may be reflected or not in the language model.

In addition, in natural language recognition performed by the natural language recognizer 330, a language model is necessary. In this case, real-time context information is always necessary.

The voice recognizer 320 converts voice signals into text in real time to update text information. The voice recognizer 320 converts voice signals input from the audio input device 250 into text. For example, in a VOD service, the voice recognizer 320 may receive voice signals through the audio input device 250 and convert the same into text information "display 'FINDING NEMO'."

Output of the voice recognizer 320 may be constantly or non-constantly updated in a Hangul character unit. That is, the voice recognizer 320 may constantly convert input voice signals into text, or may non-constantly convert the input voice signals into text by a predetermined rule or algorithm.

In addition, output of the voice recognizer 320 is generally performed according to an N-best case wherein N recognition candidates are simultaneously output together. Accordingly, the natural language recognizer 330 may also process a plurality of candidates.

The voice recognizer 320 according to an embodiment may transmit text information to the natural language recognizer 330 in real time as the text information is updated.

According to various embodiments, the voice recognizer 320 converts voice signals into text based on context information to update text information. The voice recognizer 320 may convert words or sentences, highly likely to be input by a user, into voice signals based on the context information to increase accuracy.

The natural language recognizer 330 is configured to reduce the number of command patterns that are matchable with text information based on context information as text information is updated, and to recognize the intent and entities of voice signals by matching with final command patterns. The context information may include at least one of command patterns and entities dependent upon a service state.

For example, a command pattern may (increase|raise|make) (volume|sound-level|sound [up|greatly|louder]. Here, (A|B) may mean "A or B". [C] may means that it is optional. Accordingly, the command pattern may be matched with text information "increase volume greatly", "raise volume", "make volume louder", "increase sound-level", "raise sound-level", "make sound-level louder", "increase sound", "raise sound" and "make sound louder." However, the command pattern may not be matched with text information "sound was increased".

An entity may mean an object of a command pattern. For example, when a service state is a TV service, an entity may be a channel name, a movie title, an actor name, a time, or the like. TV channel entities may include KBS, MBC, SBS, EBC, JTBC, YTN, and the like.

A command pattern, $play {channel} [now|please], including an entity may be matched with text information "play MBC please.". Here, a channel value is "MBC." For example, an entity may include a menu, content, a product name, or the like displayed on a current screen.

For example, when movie title "Star Wars" is displayed on a screen, text information "play Star Wars" may be matched with a final command pattern, $play {screen} [please]. A final command pattern may mean a finally matched command pattern of matchable command patterns.

For example, a user may input a voice signal "play Star Wars 2x please" through the audio input device 250. When text information includes command patterns, such as $play {screen} [please], $play {screen} 2x [please], $play {screen} 2.5x [please], and $step {screen} [please], matchable with "Star Wars," command patterns matchable with "play Star Wars 2" may be reduced to $play {screen} 2x [please] and $play {screen} 2.5x [please] as the text information is updated.

As the text information is continuously updated, "play Star Wars 2x" is finally matched with command patterns $play {screen} 2x [please]. Accordingly, even when the voice signal is not completely input, an intent "play 2x" and an entity "Star Wars" may be recognized.

In other words, the GUI voice control apparatus 300 may increase a response speed of voice recognition through real-time matching without separate end point detection of a voice signal.

To implement the real-time matching, the natural language recognizer 330 classifies an individual matching result between text information and each command pattern into MATCH, NO MATCH, or PARTIAL_MATCH to reduce the number of matchable command patterns.

PARTIAL_MATCH means a state in which matching is possible as text information is updated.

For example, when text information is "MBC," it is not matched with command pattern $play {channel} [now|please]. However, when the text information is updated with "play MBC," the text information may be matched with the command pattern $play {channel} [please]. Accordingly, a matching result between MBC and the command pattern is PARTIAL_MATCH. However, when the text information is updated with "show MBC now", it is not matched with the command pattern, thereby being classified into NO_MATCH.

The following Pseudo code 1 is provided to describe Early match algorithm 1 implementing a match result classification operation of the natural language recognizer 330:

```
       [Pseudo code 1]
       function early_match( gui_context ):
               valid_patterns = get_all_valid_patterns( gui_context)
        while valid_patterns ≠ {}
        text = get_STT_result(STT_TIMEOUT)
        if is_STT_timeout():
        return TIMEOUT
        else:
                          for p in valid_patterns:
        result = p.matches(text)
        if result==MATCH:
                                     return p
        else if result==NO_MATCH:
        valid_patterns = valid_patterns - p
        if sizeof(valid_patterns)==1:
 
        return valid_patterns[0]
        return NOT_RECOGNIZED
```

In Pseudo code 1, get_STT_result() is a function for gradually returning text information updated during recognition of one command (voice signal). For example, in the case of a voice signal "increase volume please," the following values may be returned in order.
"Volume"
"Increase volume"
"Increase volume please"

Early match algorithm 1 may be effective when NO_MATCH, wherein one command pattern does not match text information, is easily determined. However, in the case of command patterns that should receive input of arbitrary sentences, NO_MATCH is not generated for any text information, whereby Early match algorithm 1 may not operate. For example, in command pattern "$search {^{∗}}," ${^{∗}} may match any text, whereby the command pattern "$search {^{∗}}" may always match all text. Even when such a command pattern exists alone, Early match algorithm 1 does not normally operate and waiting may always be required until input times out.

To address such a problem, command patterns are classified into three grades.

Matchable command patterns may have an IMMEDIATE, NORMAL, or WAIT_END grade.

When matched with a command pattern of the IMMEDIATE grade, matching with the command pattern may be performed regardless of other command patterns.

The NORMAL grade may be determined as a recognition result when there is only a NORMAL-grade command pattern in MATCH or PARTIAL_MATCH.

The WAIT_END grade may be a grade of a command pattern including wildcard (${^{∗}}).

The following Pseudo code 2 is provided to describe Early match algorithm 2 to implement to have a grade:

```
[Pseudo code 2]
       function early_match_2( gui_context):
               valid_patterns = get_all_valid_patterns( gui_context )
               immediate_patterns = valid_patterns(class==IMMEDIATE)
               normal_patterns = valid_patterns(class==NORMAL)
               wait_end_patterns = valid_patterns(class=WAIT_END)
        while immediate_patterns U normal_patterns U wait_end_patterns ≠ { }:
        text = get_STT_result(STT_TIMEOUT)
        if is_STT_timeout():
        for p in wait_end_patterns:
        if p.matches(text)!=MATCH:
        wait_ end_patterns = wait_ end_patterns - p
        if wait_end_patterns == {}:
        return TIMEOUT
        else
        return wait_end_patterns
 
                    for p in immediate_patterns:
        result = p.matches(text)
        if result==MATCH:
                              return p
        else if result==NO_MATCH:
        immediate_patterns = immediate_patterns - p
 
        for p in normal_patterns:
        result = p.matches(text)
                        if result==MATCH:
        return p
        else if result==NO_MATCH:
        normal_patterns = normal_patterns - p
        if sizeof(normal_patterns)==1 and sizeof(immediate_patterns)==0:
        return normal_patterns[0]
        for p in wait_end_patterns:
        if p.matches(text)==NO_MATCH:
        wait_ end_patterns = wait_ end_patterns - p
 
        return NOT_RECOGNIZED
```

"if is_STT_timeout():~ return wait_end_patterns" is implemented to, when input times out, return matched command patterns.

The GUI voice control apparatus 300 may execute frequently used commands (voice signals), such as "increase volume" and "next screen," without delay by Early match algorithm 2.

The natural language recognizer 330, when there is no command pattern matching text information, may ignore text that has been input up to now by resetting the text information, and may process text information transmitted in real time afterwards.

The GUI voice control apparatus 300 may receive input of other voice signals, together with a command accurately input by a user, through an audio input device.

For example, the other voice signals may mean sounds from TV or a radio, voices ("um, here, so, what"), not commands or call words, of a user, voices of someone else, or speaking to some else.

When an application is controlled by voice, a user may continuously input a plurality of voice commands after one call. Here, the GUI voice control apparatus 300 may display a simple indication "the signal is ignored" and wait to receive input of a next command, rather than performing error processing and terminating such as "this is an instruction that cannot be understood," when other voice signals are input.

The following Pseudo code 3 is provided to describe a continuous recognition algorithm for ignoring unrecognizable text information and waiting:

```
       [Pseudo code 3]
       function process_voice_commands():
        wake_timeout = false
        do {
        result = early_match_2(get_gui_context())
        if result==TIMEOUT:
        wake_timeout = wait_STT(WAKE_TIMEOUT)
        else if result==NOT_RECOGNIZED:
        reset_STT_output()
        else
        process_command(result)
        } while wake_timeout==false
        close_microphone()
```

In Pseudo code 3, reset_STT_output() is a function serving STT to reset text information up to now, to ignore text that has been input up to now, and to return new text information transmitted in real time afterwards.

Wake_STT(WAKE_TIMEOUT) is a function of returning true when a new voice signal is not input during WAKE_TIME. WAKE_TIMEOUT is a value determining whether to terminate voice input when no voice signal is input during a predetermined time after being woken once, and may be WAKE TIMEOUT > TIMEOUT.

Accordingly, the GUI voice control apparatus 300 may continuously process recognized commands while ignoring non-recognized voice after being woken once by the continuous recognition algorithm.

For example, a user may input a voice signal "Alexa, by the way, wait, play MBC, this?, okay, increase volume" through an audio input device.

The GUI voice control apparatus 300 may receive input of the voice signals in a time-ordered sequence, and convert the same into text in real time to update text information.

The GUI voice control apparatus 300 may be woken by text information "Alexa." The GUI voice control apparatus 300 may perform NOT_RECOGNIZED processing on text information "by the way, wait" and may reset the text information "by the way, wait." The GUI voice control apparatus 300 may recognize text information "play MBC" and may output a channel switching control signal. The GUI voice control apparatus 300 may performed NOT_RECOGNIZED processing on text information, and may reset the text information "this?." The GUI voice control apparatus 300 may perform NOT_RECOGNIZED processing on text information "okay," and may reset the text information "okay." The GUI voice control apparatus 300 may recognize text information "increase volume" and may output a volume control signal. The GUI voice control apparatus 300 may time out (WAKE_TIMEOUT) and may terminate voice signal reception.

A voice controller 330 is configured to output a control signal according to a recognized intent and entity. The control signal may control middleware or an application. For example, an application may output a result according to a control signal, directly received thereby, through a screen output device. As another example, the control signal may be converted into a GUI event and may be transmitted to an application through middleware.

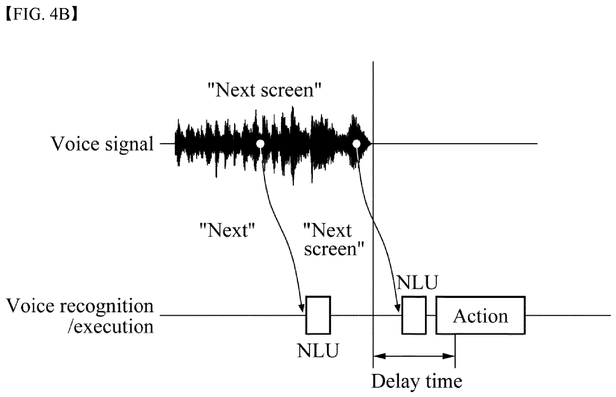

FIGS. 4A and 4B illustrate the performance of a GUI voice control apparatus of the present disclosure.

FIG. 4A illustrates a voice recognition operation of a conventional voice control device, and FIG. 4B illustrates a voice recognition operation of a voice control device 300 according to an embodiment of the present disclosure.

Referring to FIGS. 4A and 4B, the conventional voice control device may confirm a voice interval after receiving input of voice signal "next screen" and pause period (_). Signal "next screen_" determined as a voice interval may be converted into text information "next screen<END>," and may be recognized by a natural language recognizer (NLU). In the case of such an end point detection method, considerable time delay may occur until executed (acted) according to voice recognition and a control signal.

The GUI voice control apparatus 300 may convert the voice signal "next screen" into text in real time to reduce the number of command patterns matchable with "next" by the NLU and may match "next screen" with a final command pattern to execute (act) a command according to a control signal. Accordingly, the GUI voice control apparatus 300 may improve a response speed through real-time matching with command patterns without end point detection.

The GUI voice control apparatus 300 allows operations of some constituents to be performed in a server and may be implemented as a GUI voice control system including a GUI voice control apparatus 510, a voice conversion server 520, and a natural language recognition server 530.

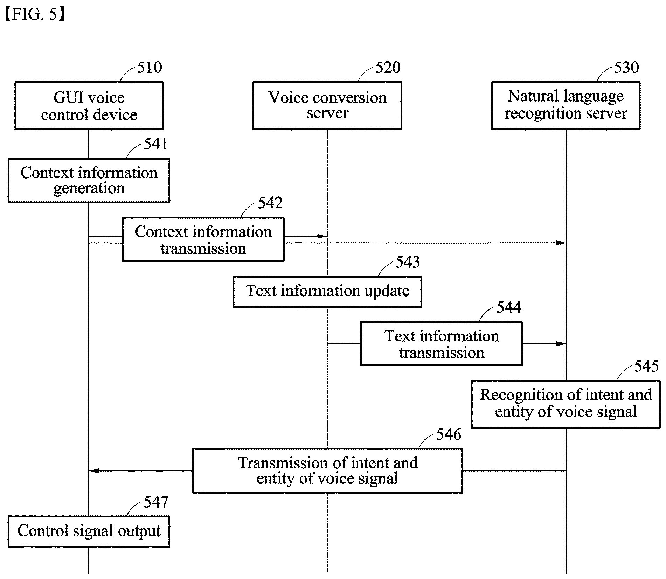

FIG. 5 is a flowchart briefly explaining a GUI voice control system in accordance with the invention.

Referring to FIG. 5, the GUI voice control system includes the GUI voice control apparatus 510, the voice conversion server 520, and the natural language recognition server 530.

The GUI voice control apparatus 510 receives DB information from a command pattern and entity database (not shown), generates context information (541), and transmits the generated context information to the voice conversion server 520 and the natural language recognition server 530 (542).

The voice conversion server 520 receives input of a voice signal from a user and updates text information (543). The voice conversion server 520 transmits text information updated in real time to the natural language recognition server 530 (544).

The natural language recognition server 530 recognizes the intent and entity of a voice signal based on context information (545). The natural language recognition server 530 transmits the recognized intent and entity to the GUI voice control apparatus 510 (546).

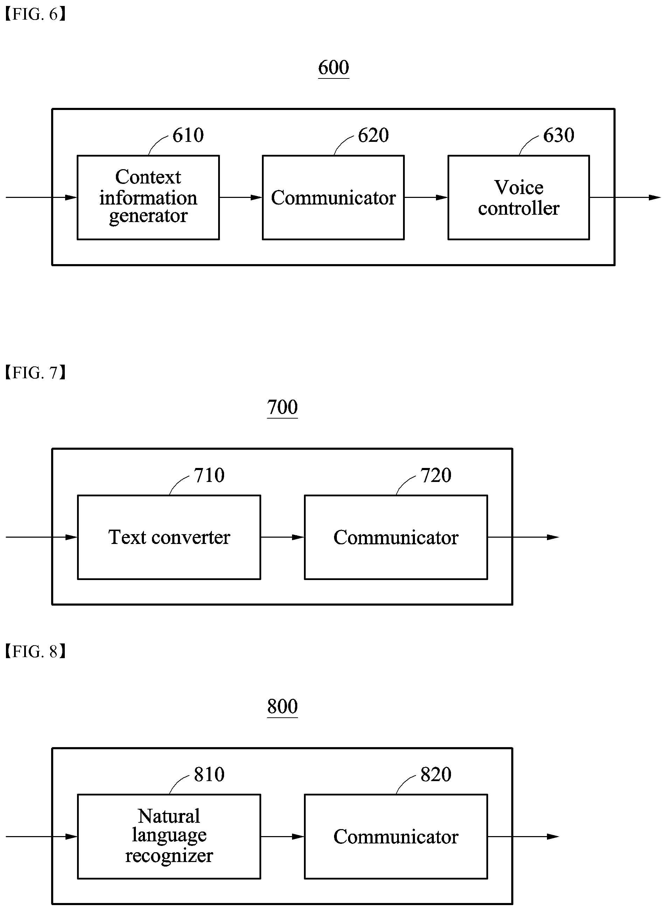

The GUI voice control apparatus 510 is configured to output a control signal according to the recognized intent and entity. Devices constituting the GUI voice control system are described in detail with reference to FIGS. 6 to 8.

FIG. 6 illustrates a block diagram of a GUI voice control apparatus.

Referring to FIG. 6, a GUI voice control apparatus 600 includes a context information generator 610, a communicator 620, and a voice controller 630.

The context information generator 610 may dynamically reflect GUI status information and DB information in a language model to generate context information.

The GUI status information may include GUI information and a service status.

The DB information may include information on at least one of predefined command patterns and entities received from the command pattern and entity database.

In this specification, command patterns and entities are described as being recorded and managed in one database, but it is only one embodiment and the present disclosure is not limited thereto.

That is, two databases in which a command pattern database and an entity database are physically separated may be implemented. In this case, the DB information may include information on predefined command patterns received from the command pattern database. In addition, the DB information may include information on entities received from the entity database.

According to various embodiments, when GUI is implemented in a cloud, the context information generator 610 may receive GUI status information from a cloud server to generate context information. Here, the GUI status information may be information on a User Interface (UI) received from a cloud server.

The communicator 620 may transmit voice signals and context information received in real time to the voice conversion server 520, transmit context information to the natural language recognition server 530, and receive the intent and entity of a voice signal. The communicator 620 may transmit a voice signal and context information to the voice conversion server 520 in real time. The communicator 620 may transmit context information to the natural language recognition server 530 and receive the intent and entity of a voice signal from the natural language recognition server 530 in real time. According to various embodiments, the communicator 620 may transmit context information only to the natural language recognition server 530.

The voice controller 630 may output a control signal according to the intent and entity of a voice signal. According to various embodiments, the GUI voice control apparatus 600 may be included in a set-top box. For example, the GUI voice control apparatus 600 may be included in a set-top box to control GUI status information of a VOD service according to voice signals.

According to various embodiments, the GUI voice control apparatus 600 may include a voice conversion server 700, which is described below with reference to FIG. 7, unlike the configuration shown in FIG. 6.

According to various embodiments, the GUI voice control apparatus 600 may include a natural language recognition server 700, which is described below with reference to FIG. 8, unlike the configuration shown in FIG. 6.

Descriptions of remaining components are the same as those of the GUI voice control apparatus 600 shown in FIG. 6 and the context information generator 310 and the voice controller 340 of the GUI voice control apparatus 300 described with reference to FIGS. 3 and 4, thus being omitted.

FIG. 7 illustrates a block diagram of a voice conversion server.

Referring to FIG. 7, a voice conversion server 700 includes a text converter 710 and a communicator 720.

The text converter 710 may convert a voice signal to text in real time to update text information. The text converter 710 may receive a voice signal and context information from the GUI voice control apparatus 510. The text converter 710 may convert a voice signal into text based on the context information to update the text information. According to various embodiments, the text converter 710 may receive only voice signals from the GUI voice control apparatus 510. Here, the text converter 710 may convert a voice signal into text without the context information to update the text information.

The communicator 720 may transmit updated text information to the natural language recognition server 530 in real time.

According to various embodiments, the voice conversion server 700 may include a natural language recognition server 800, which is described below with reference to FIG. 8, unlike the configuration shown in FIG. 7.

Descriptions of remaining components are the same as those of the voice conversion server 700 shown in FIG. 7 and the voice recognizer 320 of the GUI voice control apparatus 300 described with reference to FIGS. 3 and 4, thus being omitted.

FIG. 8 illustrates a block diagram of a natural language recognition server.

Referring to FIG. 8, a natural language recognition server 800 includes a natural language recognizer 810 and a communicator 820.

The natural language recognizer 810 may reduce the number of command patterns matchable with text information updated in real time based on context information and recognize the intent and entity of a voice signal by matching a final command pattern. The natural language recognizer 810 may receive context information from the GUI voice control apparatus 510. The natural language recognizer 810 may receive real-time updated text information from the voice conversion server 520. The natural language recognizer 810 may match text information with a final command pattern based on the context information to recognize the intent and entity of a voice signal.

The communicator 820 may transmit the intent and entity of the voice signal to the GUI voice control apparatus.

Descriptions of remaining components are the same as those of the natural language recognition server 800 shown in FIG. 8 and the natural language recognizer 330 of the GUI voice control apparatus 300 described with reference to FIGS. 3 and 4, thus being omitted.

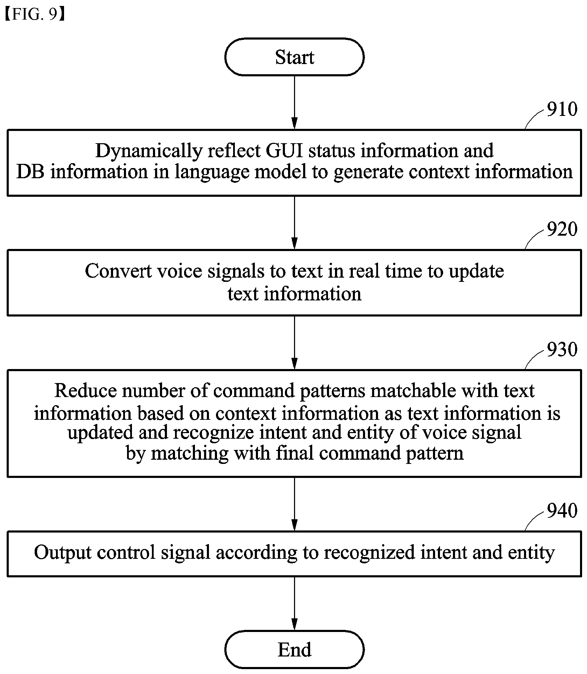

FIG. 9 illustrates a flowchart of a GUI voice control method according to an embodiment of the invention.

The GUI voice control method in shown FIG. 9 may be performed using the GUI voice control apparatus 300 described with reference to FIGS. 3 and 4.

Referring to FIG. 9, in step 910, the GUI voice control apparatus 300 dynamically reflects

GUI status information and DB information in a language model to generate context information.

The GUI status information may include GUI information and a service status.

The DB information includes information on at least one of predefined command patterns and entities received from the command pattern and entity database.

In step 920, the GUI voice control apparatus 300 converts a voice signal into text in real time to update text information.

The text information is updated by converting a voice signal into text based on the context information.

In step 930, the GUI voice control apparatus 300 2. reduces the number of command patterns matchable with the text information based on the context information as the text information is updated and recognizes the intent and entity of the voice signal by matching with a final command pattern.

The number of the matchable command patterns is reduced by classifying matching results with the text information into PARTIAL_MATCH in addition to MATCH and NO_MATCH.

The matchable command patterns have IMMEDIATE, NORMAL or WAIT END grades.

When command patterns matchable with the text information do not present, text that has been input up to now may be ignored by resetting the text information, and text information updated in real time afterwards may be processed.

In step 940, the GUI voice control apparatus 300 outputs a control signal according to a recognized intent and entity.

The GUI voice control method shown in FIG. 9 is the same as the operation method of the GUI voice control apparatus 300 described with reference to FIGS. 3 and 4, whereby detailed descriptions of the GUI voice control method are omitted.

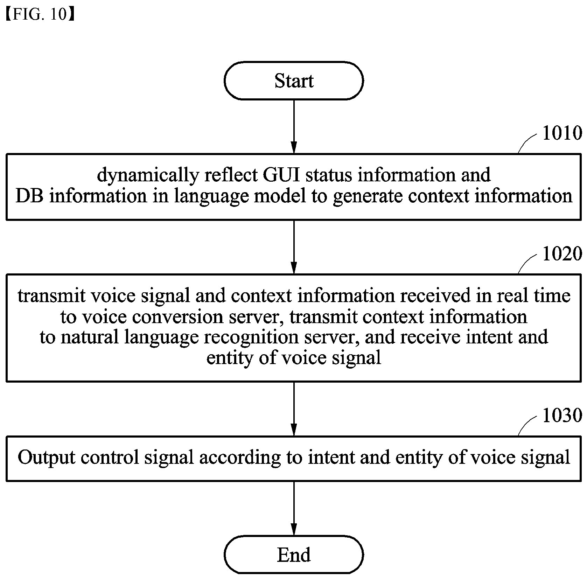

FIG. 10 illustrates a flowchart of a GUI voice control method according to another embodiment of the invention.

The GUI voice control method shown in FIG. 10 may be performed using the GUI voice control apparatus 600 shown in FIG. 6.

Referring to FIG. 10, in step 1010, the GUI voice control apparatus 600 dynamically reflects

GUI status information and DB information in a language model to generate context information.

The GUI status information may include GUI information and a service status.

The DB information includes information on at least one of predefined command patterns and entities received from the command pattern and entity database.

In step 1020, the GUI voice control apparatus 600 transmits a voice signal and context information received in real time to the voice conversion server 520, transmits the context information to the natural language recognition server 530, and receives the intent and entity of the voice signal.

In step 1030, the GUI voice control apparatus 600 outputs a control signal according to the intent and entity of the voice signal.

The GUI voice control method shown in FIG. 10 is the same as the operation method of the GUI voice control apparatus 600 described with reference to FIG. 6, whereby detailed descriptions of the GUI voice control method are omitted.

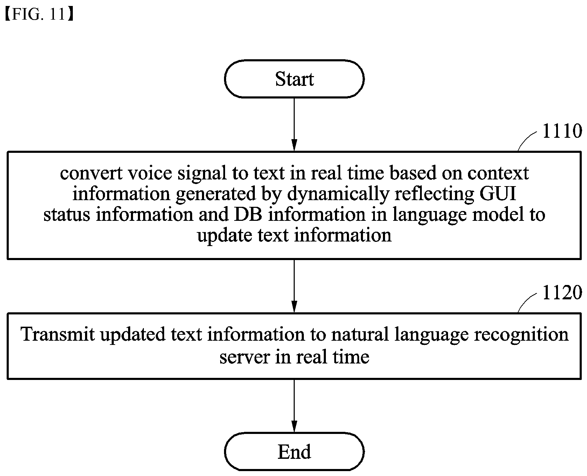

FIG. 11 illustrates a flowchart of a voice conversion method.

The voice conversion method of FIG. 11 may be performed using the voice conversion server 700 shown in FIG. 7.

Referring to FIG. 11, in step 1110, the voice conversion server 700 may convert a voice signal into text in real time based on context information generated by dynamically reflecting GUI status information and DB information in a language model to update the text information.

The GUI status information may include GUI information and the service status.

The DB information may include information on at least one of predefined command patterns and entities received from the command pattern and entity database.

In step 1120, the voice conversion server 700 may transmit the updated text information to the natural language recognition server 530 in real time.

The voice conversion method shown in FIG. 11 is the same as the operation method of the voice conversion server 700 described with reference to FIG. 7, whereby detailed descriptions of the voice conversion method are omitted.

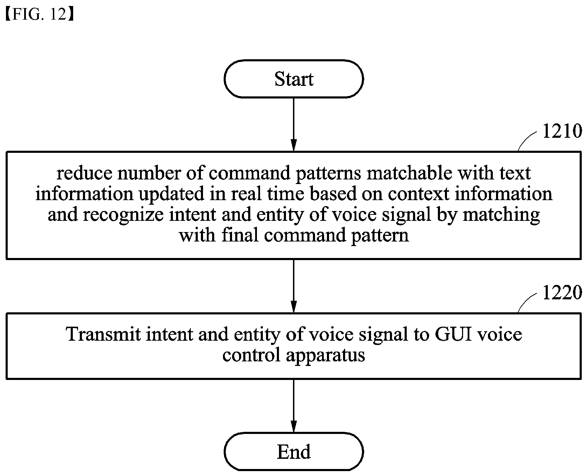

FIG. 12 illustrates a flowchart of a natural language recognition method.

The natural language recognition method shown in FIG. 12 may be performed using the natural language recognition server 800 shown in FIG. 8.

Referring to FIG. 12, in step 1210, the natural language recognition server 800 may reduce the number of command patterns matchable with text information updated in real time based on context information and recognize the intent and entity of a voice signal by matching with a final command pattern.

The number of the matchable command patterns may be reduced by classifying matching results with the text information into PARTIAL_MATCH in addition to MATCH and NO_MATCH.

The matchable command patterns may have IMMEDIATE, NORMAL or WAIT END grades.

When command patterns matchable with the text information do not present, text that has been input up to now may be ignored by resetting the text information, and text information updated in real time afterwards may be processed.

In step 1220, the natural language recognition server 800 may transmit the intent and entity of the voice signal to the GUI voice control apparatus 510.

The natural language recognition method shown in FIG. 12 is the same as the operation method of the natural language recognition server 800 described with reference to FIG. 8, whereby detailed descriptions of the natural language recognition method are omitted.

In the case of a conventional method, a recognition result is derived based on a signal determined as a voice interval after a process of discriminating start and end points of text by confirming whether voice is non-voice is terminated, whereby a response time is long.

However, in the case of the present disclosure, the number of matchable command patterns is reduced according to input text and, when the number of the matchable command patterns is reduced to a certain number or less, a control signal is directly generated without delay to control a device, whereby a voice recognition speed is significantly improved.

As apparent from the above description, the present disclosure provides a GUI voice control apparatus capable of improving the speed and accuracy of voice recognition by matching a voice signal transmitted in real time with a command pattern without an end point detection process and a method thereof.

In addition, a GUI voice control apparatus and method according to an embodiment of the present disclosure can voice-control a GUI-based application used in a device provided with a screen.

In addition, a GUI voice control apparatus and method according to an embodiment of the present disclosure can improve the speed and accuracy of voice recognition by minimizing modification of an existing application.

Further, a GUI voice control apparatus and method according to an embodiment of the present disclosure can improve the accuracy of voice recognition using a language model in which information transmitted from GUI middleware and an application is dynamically reflected.

The apparatus described above may be implemented as a hardware component, a software component, and/or a combination of hardware components and software components. For example, the apparatus and components described in the embodiments may be achieved using one or more general purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processing device may execute an operating system (OS) and one or more software applications executing on the operating system. In addition, the processing device may access, store, manipulate, process, and generate data in response to execution of the software. For ease of understanding, the processing apparatus may be described as being used singly, but those skilled in the art will recognize that the processing apparatus may include a plurality of processing elements and/or a plurality of types of processing elements. For example, the processing apparatus may include a plurality of processors or one processor and one controller. Other processing configurations, such as a parallel processor, are also possible.

The software may include computer programs, code, instructions, or a combination of one or more of the foregoing, configure the processing apparatus to operate as desired, or command the processing apparatus, either independently or collectively. In order to be interpreted by a processing device or to provide instructions or data to a processing device, the software and/or data may be embodied permanently or temporarily in any type of a machine, a component, a physical device, a virtual device, a computer storage medium or device, or a transmission signal wave. The software may be distributed over a networked computer system and stored or executed in a distributed manner. The software and data may be stored in one or more computer-readable recording media.

The methods according to the embodiments of the present disclosure may be implemented in the form of a program command that can be executed through various computer means and recorded in a computer-readable medium. The computer-readable medium can store program commands, data files, data structures or combinations thereof. The program commands recorded in the medium may be specially designed and configured for the present disclosure or be known to those skilled in the field of computer software. Examples of a computer-readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include machine language code created by a compiler and high-level language code executable by a computer using an interpreter and the like. The hardware devices described above may be configured to operate as one or more software modules to perform the operations of the embodiments, and vice versa.

## Claims

1. A Graphical User Interface, GUI, voice control apparatus (210), comprising:
a context information generator (310) configured to dynamically reflect GUI status information and DB information in a language model to generate context information;
a voice recognizer (320) configured to convert a voice signal into text in real time to update text information;
a natural language recognizer (330) configured to reduce the number of command patterns matchable with the text information based on the context information as the text information is updated, and recognize an intent and entity of the voice signal by matching with a final command pattern; and
a voice controller (340) configured to output a control signal according to the recognized intent and entity,
wherein the natural language recognizer (330) is further configured to classify a matching result of the text information into PARTIAL_MATCH in addition to MATCH and NO_MATCH to reduce the number of matchable command patterns, where PARTIAL_MATCH means a state in which matching is possible as text information is updated,
wherein the DB information comprises information on at least one of predefined command patterns and entities received from a command pattern and entity database,
wherein the matchable command patterns have IMMEDIATE, NORMAL, or WAIT_END grades, wherein matching with a command pattern of the IMMEDIATE grade is performed regardless of other command patterns, the NORMAL grade is determined when there is only a NORMAL grade pattern in MATCH or PARTIAL_MATCH, and WAIT_END is a grade of a command pattern including wildcard,
wherein the final command pattern means a finally matched command pattern of the matchable command patterns.

2. The GUI voice control apparatus (210) according to claim 1, wherein the GUI status information comprises GUI information and a service status.

3. The GUI voice control apparatus (210) according to claim 1, wherein the voice recognizer (320) converts the voice signal into text based on the context information to update the text information.

4. The GUI voice control apparatus (210) according to claim 1, wherein the natural language recognizer (330), when there is no command pattern matching the text information, resets the text information and processes text information updated in real time.

5. A Graphical User Interface, GUI, voice control system, comprising:
a GUI voice control apparatus (510), a voice conversion server (520), and a natural language recognition server (530),
wherein the GUI voice control apparatus comprises:
a context information generator (541) configured to dynamically reflect GUI status information and DB information in a language model to generate context information;
a communicator configured to transmit a voice signal received in real time and the context information to the voice conversion server, transmit the context information to the natural language recognition server, and receive an intent and entity of the voice signal; and
a voice controller (547) configured to output a control signal according to the intent and entity of the voice signal,
wherein the DB information comprises information on at least one of predefined command patterns and entities received from a command pattern and entity database,
wherein the voice conversion server is configured to update text information by converting the received voice signal into a text and to transmit the updated text information to the natural language recognition server in real time,
wherein the natural language recognition server is configured to reduce the number of command patterns matchable with the text information based on the context information as the text information is updated and by classifying a matching result of the text information into PARTIAL_MATCH in addition to MATCH and NO_MATCH, where PARTIAL MATCH means a state in which matching is possible as text information is updated, and to recognize an intent and entity of the voice signal by matching with a final command pattern,
wherein the matchable command patterns have IMMEDIATE, NORMAL, or WAIT END grades, wherein matching with a command pattern of the IMMEDIATE grade is performed regardless of other command patterns, the NORMAL grade is determined when there is only a NORMAL grade pattern in MATCH or PARTIAL_MATCH, and WAIT_END is a grade of a command pattern including wildcard,
wherein the final command pattern means a finally matched command pattern of the matchable command patterns.

6. The GUI voice control system according to claim 5, wherein the GUI status information comprises GUI information and a service status.

7. A Graphical User Interface, GUI, voice control method, the method comprising:
dynamically reflecting GUI status information and DB information in a language model to generate context information;
converting a voice signal into text in real time to update text information;
reducing the number of command patterns matchable with the text information based on the context information as the text information is updated, and recognizing an intent and entity of the voice signal by matching with a final command pattern; and
outputting a control signal according to the recognized intent and entity,
wherein the GUI status information comprises GUI information and a service status,
wherein the DB information comprises information on at least one of predefined command patterns and entities received from a command pattern and entity database,
wherein the text information is updated by converting the voice signal into text based on the context information,
wherein the number of the matchable command patterns is reduced by classifying matching results of the text information into PARTIAL_MATCH in addition to MATCH and NO_MATCH, where PARTIAL_MATCH means a state in which matching is possible as text information is updated,
wherein the matchable command patterns have IMMEDIATE, NORMAL, or WAIT_END grades, wherein matching with a command pattern of the IMMEDIATE grade is performed regardless of other command patterns, the NORMAL grade is determined when there is only a NORMAL grade pattern in MATCH or PARTIAL_MATCH, and WAIT_END is a grade of a command pattern including wildcard,
wherein the final command pattern means a finally matched command pattern of the matchable command patterns.

8. The GUI voice control method according to claim 7, wherein, when there is no command pattern matching the text information, the text information is reset and text information updated in real time is processed.

9. A Graphical User Interface, GUI, voice control method, comprising:
dynamically reflecting GUI status information and DB information in a language model to generate context information;
transmitting a voice signal received in real time and the context information to a voice conversion server, transmitting the context information to a natural language recognition server, and receiving an intent and entity of the voice signal; and
outputting a control signal according to the intent and entity of the voice signal,
wherein the DB information comprises information on at least one of predefined command patterns and entities received from a command pattern and entity database,
wherein voice conversion server updates text information by converting the received voice signal into a text and transmits the updated text information to the natural language recognition server in real time,
wherein the natural language recognition server reduces the number of command patterns matchable with the text information based on the context information as the text information is updated and by classifying a matching result of the text information into PARTIAL_MATCH in addition to MATCH and NO_MATCH, where PARTIAL_MATCH means a state in which matching is possible as text information is updated,
and recognizes an intent and entity of the voice signal by matching with a final command pattern,
wherein the matchable command patterns have IMMEDIATE, NORMAL, or WAIT_END grades, wherein matching with a command pattern of the IMMEDIATE grade is performed regardless of other command patterns, the NORMAL grade is determined when there is only a NORMAL grade pattern in MATCH or PARTIAL_MATCH, and WAIT_END is a grade of a command pattern including wildcard,
wherein the final command pattern means a finally matched command pattern of the matchable command patterns.

10. The GUI voice control method according to claim 9, wherein the GUI status information comprises GUI information and a service status.

## Patentansprüche

1. Sprachsteuerungsvorrichtung (210) für eine grafische Benutzeroberfläche (*graphical user interface*), GUI, umfassend:
einen Kontextinformationsgenerator (310), der dazu konfiguriert ist, eine GUI-Statusinformation und eine DB-Information in einem Sprachenmodell dynamisch zu reflektieren, um eine Kontextinformation zu generieren;
eine Spracherkennungseinrichtung (320), die dazu konfiguriert ist, ein Sprachsignal in Echtzeit in Text umzuwandeln, um eine Textinformation upzudaten;
eine Erkennungseinrichtung für natürliche Sprache (330), die dazu konfiguriert ist, die Anzahl von Befehlsmustern, die mit der Textinformation matchbar sind, basierend auf der Kontextinformation zu reduzieren, wenn die Textinformation upgedatet ist, und eine Absicht und eine Entität des Sprachsignals durch Matchen mit einem finalen Befehlsmuster zu erkennen;
eine Sprachsteuerungseinrichtung (340), die dazu konfiguriert ist, ein Steuersignal gemäß der erkannten Absicht und Entität auszugeben,
wobei die Erkennungseinrichtung für natürliche Sprache (330) ferner dazu konfiguriert ist, ein Matchingresultat der Textinformation in PARTIAL_MATCH zusätzlich zu MATCH und NO_MATCH zu klassifizieren, um die Anzahl von matchbaren Befehlsmustern zu reduzieren, wobei PARTIAL_MATCH einen Status bedeutet, in dem Matchen möglich ist, wenn eine Textinformation upgedatet ist,
wobei die DB-Information eine Information über wenigstens eines von vordefinierten Befehlsmustern und Entitäten umfasst, die von einer Befehlsmuster- und Entitäten-Datenbank empfangen wurden,
wobei die matchbaren Befehlsmuster IMMEDIATE, NORMAL oder WAIT_END-Stufen aufweisen, wobei ein Matchen mit einem Befehlsmuster der IMMEDIATE-Stufe ungeachtet anderer Befehlsmuster durchgeführt wird, die NORMAL-Stufe bestimmt wird, wenn es nur ein NORMAL-Stufen-Muster in MATCH oder PARTIAL_MATCH gibt, und WAIT_END eine Stufe eines Befehlsmusters ist, das eine Wildcard umfasst,
wobei das finale Befehlsmuster ein final gematchtes Befehlsmuster der matchbaren Befehlsmuster bedeutet.

2. GUI-Sprachsteuerungsvorrichtung (210) nach Anspruch 1, wobei die GUI-Statusinformation eine GUI-Information und einen Dienststatus umfasst.

3. GUI-Sprachsteuerungsvorrichtung (210) nach Anspruch 1, wobei die Spracherkennungseinrichtung (320) das Sprachsignal basierend auf der Kontextinformation in Text umwandelt, um die Textinformation upzudaten.

4. GUI-Sprachsteuerungsvorrichtung (210) nach Anspruch 1, wobei die Erkennungseinrichtung für natürliche Sprache (330), wenn es kein Befehlsmuster gibt, das die Textinformation matcht, die Textinformation zurücksetzt und eine in Echtzeit upgedatete Textinformation verarbeitet.

5. Sprachsteuerungssystem für eine grafische Benutzeroberfläche, GUI, umfassend:
eine GUI-Sprachsteuerungsvorrichtung (510), einen Sprachkonvertierungsserver (520) und einen Server für natürliche Spracherkennung (530),
wobei die GUI-Sprachsteuerungsvorrichtung umfasst:
einen Kontextinformationsgenerator (541), der dazu konfiguriert ist, eine GUI-Statusinformation und eine DB-Information in einem Sprachenmodell dynamisch zu reflektieren, um eine Kontextinformation zu generieren;
eine Kommunikationseinrichtung, die dazu konfiguriert ist, ein in Echtzeit empfangenes Sprachsignal und die Kontextinformation zu dem Sprachkonvertierungsserver zu übermitteln, die Kontextinformation zu dem Server für natürliche Spracherkennung zu übermitteln, und eine Absicht und eine Entität des Sprachsignals zu empfangen; und
eine Sprachsteuerungseinrichtung (547), die dazu konfiguriert ist, ein Steuersignal gemäß der Absicht und Entität des Sprachsignals auszugeben,
wobei die DB-Information eine Information über wenigstens eines von vordefinierten Befehlsmustern und Entitäten umfasst, die von einer Befehlsmuster- und Entitäten-Datenbank empfangen wurden,
wobei der Sprachkonvertierungsserver dazu konfiguriert ist, eine Textinformation durch Umwandeln des empfangenen Sprachsignals in einen Text upzudaten und die upgedatete Textinformation zu dem Server für natürliche Spracherkennung in Echtzeit zu übermitteln,
wobei der Server für natürliche Spracherkennung dazu konfiguriert ist, die Anzahl von Befehlsmustern, die mit der Textinformation matchbar sind, basierend auf der Kontextinformation, wenn die Textinformation upgedatet ist, und durch Klassifizieren eines Matchingresultats der Textinformation in PARTIAL_MATCH zusätzlich zu MATCH und NO_MATCH, zu reduzieren, wobei PARTIAL_MATCH einen Status bedeutet, in dem Matchen möglich ist, wenn eine Textinformation upgedatet ist, und eine Absicht und eine Entität des Sprachsignals durch Matchen mit einem finalen Befehlsmuster zu erkennen,
wobei die matchbaren Befehlsmuster IMMEDIATE, NORMAL oder WAIT_END-Stufen aufweisen, wobei ein Matchen mit einem Befehlsmuster der IMMEDIATE-Stufe ungeachtet anderer Befehlsmuster durchgeführt wird, die NORMAL-Stufe bestimmt wird, wenn es nur ein NORMAL-Stufen-Muster in MATCH oder PARTIAL_MATCH gibt, und WAIT_END eine Stufe eines Befehlsmusters ist, das eine Wildcard umfasst,
wobei das finale Befehlsmuster ein final gematchtes Befehlsmuster der matchbaren Befehlsmuster bedeutet.

6. GUI-Sprachsteuerungssystem (210) nach Anspruch 5, wobei die GUI-Statusinformation eine GUI-Information und einen Dienststatus umfasst.

7. Sprachsteuerungsverfahren für eine grafische Benutzeroberfläche, GUI, wobei das Verfahren umfasst:
dynamisches Reflektieren einer GUI-Statusinformation und einer DB-Information in einem Sprachenmodell, um eine Kontextinformation zu generieren;
Umwandeln eines Sprachsignals in Text in Echtzeit, um eine Textinformation upzudaten;
Reduzieren der Anzahl von Befehlsmustern, die mit der Textinformation matchbar sind, basierend auf der Kontextinformation, wenn die Textinformation upgedatet ist, und Erkennen einer Absicht und einer Entität des Sprachsignals durch Matchen mit einem finalen Befehlsmuster; und
Ausgeben eines Steuersignals gemäß der erkannten Absicht und Entität,
wobei die GUI-Statusinformation eine GUI-Information und einen Dienststatus umfasst,
wobei die DB-Information eine Information über wenigstens eines von vordefinierten Befehlsmustern und Entitäten umfasst, die von einer Befehlsmuster- und Entitäten-Datenbank empfangen wurden,
wobei die Textinformation durch Umwandeln des Sprachsignals in Text basierend auf der Kontextinformation upgedatet wird,
wobei die Anzahl der matchbaren Befehlsmuster durch Klassifizieren von Matchingresultaten der Textinformation in PARTIAL_MATCH zusätzlich zu MATCH und NO_MATCH reduziert wird, wobei PARTIAL_MATCH einen Status bedeutet, in dem Matchen möglich ist, wenn eine Textinformation upgedatet ist,
wobei die matchbaren Befehlsmuster IMMEDIATE, NORMAL oder WAIT_END-Stufen aufweisen, wobei ein Matchen mit einem Befehlsmuster der IMMEDIATE-Stufe ungeachtet anderer Befehlsmuster durchgeführt wird, die NORMAL-Stufe bestimmt wird, wenn es nur ein NORMAL-Stufen-Muster in MATCH oder PARTIAL_MATCH gibt, und WAIT_END eine Stufe eines Befehlsmusters ist, das eine Wildcard umfasst,
wobei das finale Befehlsmuster ein final gematchtes Befehlsmuster der matchbaren Befehlsmuster bedeutet.

8. GUI-Sprachsteuerungsverfahren nach Anspruch 7, wobei, wenn es kein Befehlsmuster gibt, das die Textinformation matcht, die Textinformation zurückgesetzt wird und eine in Echtzeit upgedatete Textinformation verarbeitet wird.

9. Sprachsteuerungsverfahren für eine grafische Benutzeroberfläche, GUI, umfassend:
dynamisches Reflektieren einer GUI-Statusinformation und einer DB-Information in einem Sprachenmodell, um eine Kontextinformation zu generieren;
Übermitteln eines in Echtzeit empfangenen Sprachsignals und der Kontextinformation zu einem Sprachkonvertierungsserver, Übermitteln der Kontextinformation zu einem Server für natürliche Spracherkennung, und Empfangen einer Absicht und einer Entität des Sprachsignals; und
Ausgeben eines Steuersignals gemäß der erkannten Absicht und Entität des Sprachsignals,
wobei die DB-Information eine Information über wenigstens eines von vordefinierten Befehlsmustern und Entitäten umfasst, die von einer Befehlsmuster- und Entitäten-Datenbank empfangen wurden,
wobei der Sprachkonvertierungsserver eine Textinformation durch Umwandeln des empfangenen Sprachsignals in einen Text updatet und die upgedatete Textinformation zu dem Server für natürliche Spracherkennung in Echtzeit übermittelt,
wobei der Server für natürliche Spracherkennung die Anzahl von Befehlsmustern, die mit der Textinformation matchbar sind, basierend auf der Kontextinformation, wenn die Textinformation upgedatet ist, und durch Klassifizieren eines Matchingresultats der Textinformation in PARTIAL_MATCH zusätzlich zu MATCH und NO_MATCH reduziert, wobei PARTIAL_MATCH einen Status bedeutet, in dem Matchen möglich ist, wenn eine Textinformation upgedatet ist, und eine Absicht und eine Entität des Sprachsignals durch Matchen mit einem finalen Befehlsmuster erkennt,
wobei die matchbaren Befehlsmuster IMMEDIATE, NORMAL oder WAIT_END-Stufen aufweisen, wobei ein Matchen mit einem Befehlsmuster der IMMEDIATE-Stufe ungeachtet anderer Befehlsmuster durchgeführt wird, die NORMAL-Stufe bestimmt wird, wenn es nur ein NORMAL-Stufen-Muster in MATCH oder PARTIAL_MATCH gibt, und WAIT_END eine Stufe eines Befehlsmusters ist, das eine Wildcard umfasst,
wobei das finale Befehlsmuster ein final gematchtes Befehlsmuster der matchbaren Befehlsmuster bedeutet.

10. GUI-Sprachsteuerungsverfahren nach Anspruch 9, wobei die GUI-Statusinformation eine GUI-Information und einen Dienststatus umfasst.

## Revendications

1. Appareil de commande vocale pour une interface graphique pour un utilisateur (210), GUI, comprenant :
un générateur d'information contextuelle (310) configuré pour refléter dynamiquement l'information sur le statut de la GUI et l'information de DB dans le modèle d'une langue pour générer de l'information contextuelle,
un système de reconnaissance vocale (320) configuré pour convertir un signal vocal en texte en temps réel pour mettre à jour l'information textuelle,
un système de reconnaissance de langue naturelle (330) configuré pour réduire le nombre de motifs de commande pouvant être appariés à de l'information textuelle basée sur l'information contextuelle à mesure que l'information textuelle est mise à jour et reconnaître une intention et une entité du signal vocal en l'appariant avec un motif final de commande et
une commande vocale (340) configurée pour émettre un signal de commande en fonction de l'intention et de l'entité reconnues,
**caractérisé en ce que** le système de reconnaissance de langue naturelle (330) est en outre configuré pour classifier un résultat d'appariement de l'information textuelle en APPARIEMENT_PARTIEL outre APPARIEMENT et PAS_D'APPARIEMENT pour réduire le nombre de motifs de commande appariables, où APPARIEMENT_PARTIEL signifie un état dans lequel l'appariement est possible à mesure que l'information textuelle est mise à jour,
**en ce que** l'information DB comprend de l'information sur au moins un des motifs et des entités de commande prédéfinis reçus depuis une base de données de motifs et d'entités de commande,
**en ce que** les motifs de commande appariables ont des notes IMMEDIAT, NORMAL ou ATTENDRE_LA_FIN, où l'appariement avec un motif de commande de la note IMMEDIAT est réalisé sans tenir compte des autres motifs de commande, la note NORMAL est déterminée quand il y a uniquement un motif de note NORMAL en APPARIEMENT ou APPARIEMENT_PARTIEL et ATTENDRE_LA_FIN est une note d'un motif de commande incluant un remplacement,
**en ce que** le motif de commande final signifie un motif de commande finalement apparié parmi les motifs de commande appariables.

2. Appareil de commande vocale d'une GUI (210) selon la revendication 1, **caractérisé en ce que** l'information sur le statut de la GUI comprend l'information de la GUI et un statut de service.

3. Appareil de commande vocale d'une GUI (210) selon la revendication 1, **caractérisé en ce que** la reconnaissance vocale (320) convertit le signal vocal en texte sur la base de l'information contextuelle pour mettre à jour l'information textuelle.

4. Appareil de commande vocale d'une GUI (210) selon la revendication 1, **caractérisé en ce que** la reconnaissance de langue naturelle (330), quand il n'y a pas de motif de commande correspondant à l'information textuelle, réinitialise l'information textuelle et traite l'information textuelle mise à jour en temps réel.

5. Système de commande vocale pour une interface graphique pour un utilisateur, GUI, comprenant :
un appareil de commande vocale pour une GUI (510), un serveur de conversion vocale (520), et un serveur de reconnaissance de langue naturelle (530),
**caractérisé en ce que** l'appareil de commande vocale pour une GUI comprend :
un générateur d'information contextuelle (541) configuré pour refléter dynamiquement l'information de statut de la GUI et l'information DB dans un modèle de langue pour générer de l'information contextuelle,
un communicateur configuré pour transmettre un signal vocal reçu en temps réel et l'information contextuelle au serveur de conversion vocale, transmettre l'information contextuelle au serveur de reconnaissance de langue naturelle et recevoir une intension et une entité du signal vocal et
un contrôleur vocal (547) configuré pour émettre un signal de commande selon l'intention et l'entité du signal vocal,
**en ce que** l'information DB comprend de l'information sur au moins un motif parmi les motifs et les entités de commande prédéfinis reçus depuis une base de données de motifs et d'entités de commande,
**en ce que** le serveur de conversion vocale est configuré pour mettre à jour l'information textuelle en convertissant le signal vocal reçu en texte et pour transmettre l'information textuelle mise à jour au serveur de reconnaissance de langue naturelle en temps réel,
**en ce que** le serveur de reconnaissance de langue naturelle est configuré pour réduire le nombre de motifs de commande appariables avec l'information textuelle sur la base de l'information contextuelle à mesure que l'information textuelle est mise à jour et en classifiant un résultat d'appariement de l'information textuelle en APPARIEMENT_PARTIEL outre APPARIEMENT et PAS_D'APPARIEMENT, où APPARIEMENT_PARTIEL signifie un état dans lequel l'appariement est possible à mesure que l'information textuelle est mise à jour,
et pour reconnaître une intention et une entité du signal vocal en appariement avec un motif de commande finale,
**en ce que** les motifs de commande appariables ont des notes IMMEDIAT, NORMAL ou ATTENDRE_LA_FIN, où l'appariement avec un motif de commande de la note IMMEDIAT est réalisé sans tenir compte des autres motifs de commande, la note NORMAL est déterminée quand il y a uniquement un motif de note NORMAL en APPARIEMENT ou APPARIEMENT_PARTIEL et ATTENDRE_LA_FIN est une note d'un motif de commande incluant le remplacement,
**en ce que** le motif de commande final signifie un motif de commande finalement apparié parmi les motifs de commande appariables.

6. Système de commande vocal pour une GUI selon la revendication 5, **caractérisé en ce que** l'information de statut de la GUI comprend l'information de la GUI et un statut de service.

7. Procédé de commande vocale pour une interface graphique pour un utilisateur, GUI, le procédé comprenant :
refléter dynamiquement l'information de statut de la GUI et l'information DB dans un modèle de langue pour générer de l'information contextuelle,
convertir un signal vocal en texte en temps réel pour mettre à jour l'information textuelle,
réduire le nombre de motifs de commande appariables avec l'information textuelle sur la base de l'information contextuelle à mesure que l'information textuelle est mise à jour et reconnaître une intention et une entité du signal vocal par appariement avec un motif final de commande et
émettre un signal de commande selon l'intention et l'entité reconnues,
**caractérisé en ce que** l'information du statut de la GUI comprend l'information de la GUI et un statut de service,
**en ce que** l'information DB comprend de l'information sur au moins un parmi les motifs et les entités de commande prédéfinis reçus depuis une base de données de motifs et d'entités de commande,
**en ce que** l'information textuelle est mise à jour en convertissant le signal vocal en texte sur la base de l'information contextuelle,
**en ce que** le nombre de motifs de commande appariables est réduit en classifiant les résultats d'appariement de l'information textuelle en APPARIEMENT_PARTIEL outre APPARIEMENT et PAS_D'APPARIEMENT, où APPARIEMENT_PARTIEL signifie un état dans lequel l'appariement est possible à mesure que l'information textuelle est mise à jour,
**en ce que** les motifs de commande appariables ont des notes IMMEDIAT, NORMAL ou ATTENDRE_LA_FIN, où l'appariement avec un motif de commande de la note IMMEDIAT est réalisé sans tenir compte des autres motifs de commande, la note NORMAL est déterminée quand il y a uniquement un motif de note NORMAL en APPARIEMENT ou APPARIEMENT_PARTIEL et ATTENDRE_LA_FIN est une note d'un motif de commande incluant le remplacement,
**en ce que** le motif de commande final signifie un motif de commande finalement apparié parmi les motifs de commande appariables.

8. Procédé de commande vocal pour une GUI selon la revendication 7, **caractérisé en ce que**, quand il n'y a aucun motif de commande correspondant à l'information textuelle, l'information textuelle est réinitialisée et l'information textuelle mise à jour en temps réel est traitée.

9. Procédé de commande vocal pour une interface graphique pour un utilisateur, GUI, comprenant :
refléter dynamiquement l'information de statut de la GUI et l'information de DB dans un modèle de langue pour générer de l'information contextuelle,
transmettre un signal vocal reçu en temps réel et l'information contextuelle à un serveur de conversion vocal, transmettre l'information contextuelle à un serveur de reconnaissance de langue naturelle et recevoir une intention et une entité du signal vocal et
émettre un signal de commande selon l'intention et l'entité du signal vocal,
**caractérisé en ce que** l'information de DB comprend l'information sur au moins un des motifs et entités de commande prédéfinis reçus depuis une base de données de motifs et entités de commande,
**en ce que** le serveur de conversion vocal met à jour l'information textuelle en convertissant le signal vocal reçu en un texte et transmet l'information textuelle mise à jour au serveur de reconnaissance de langue naturelle en temps réel,
**en ce que** le serveur de reconnaissance de langue naturelle réduit le nombre de motifs de commande appariables avec l'information textuelle basée sur l'information contextuelle à mesure que l'information textuelle est mise à jour et en classifiant un résultat d'appariement de l'information textuelle en APPARIEMENT_PARTIEL outre APPARIEMENT et PAS_D'APPARIEMENT, où APPARIEMENT_PARTIEL signifie un état dans lequel l'appariement est possible à mesure que l'information textuelle est mise à jour,
et reconnaît une intention et une entité du signal vocal en l'appariant avec un motif de commande final,
**en ce que** les motifs de commande appariables ont des notes de IMMEDIAT, NORMAL ou ATTENDRE_LA_FIN, où l'appariement avec un motif de commande de la note IMMEDIAT est réalisé sans tenir compte des autres motifs de commande, la note NORMAL est déterminée quand il y a uniquement un motif de note NORMAL en APPARIEMENT ou APPARIEMENT_PARTIEL et ATTENDRE_LA FIN est une note d'un motif de commande incluant le remplacement,
**en ce que** le motif de commande final signifie un motif de commande finalement apparié parmi les motifs de commande appariables.

10. Procédé de commande vocale d'une GUI selon la revendication 9, **caractérisé en ce que** l'information de statut de la GUI comprend l'information de la GUI et un état de service.
